# EUROPEAN PATENT APPLICATION

(11) **EP 1 970 504 A1**
(43) Date of publication of application: **17.09.2008**
(21) Application number: 07104351.7
(22) Date of filing: 16.03.2007
(51) Int. Cl.: E04H 5/04

(54) **Modular foundation for a transformer station**

(71) Applicant: ABB Technology AG, 8050 Zürich (CH)
(72) Inventor: Thrue, Carsten, 8740, Brædstrup (DK); Dukkaiappan, Subbiathever, 422007, Nashik (IN); Dahibhate, Sameer, 422007, Nashik (IN)
(74) Representative: Nielsen, Leif

(57) **Abstract**

A foundation for an electrical transformer station, wherein the foundation is assembled from a plurality of cuboid modules fixed to each other and forming a solid and static foundation. The cuboid modules may be provided with T-formed grooves in the sides of the cuboid modules. Adjacent cuboid modules may be linked together by inserting corresponding H-formed plugs into the T-formed grooves of two adjacent cuboid modules.

## Description

### FIELD OF THE INVENTION

The present invention relates to a foundation for an electrical transformer station. Especially, the invention related to a foundation for a Compact Secondary Substation.

### BACKGROUND OF THE INVENTION

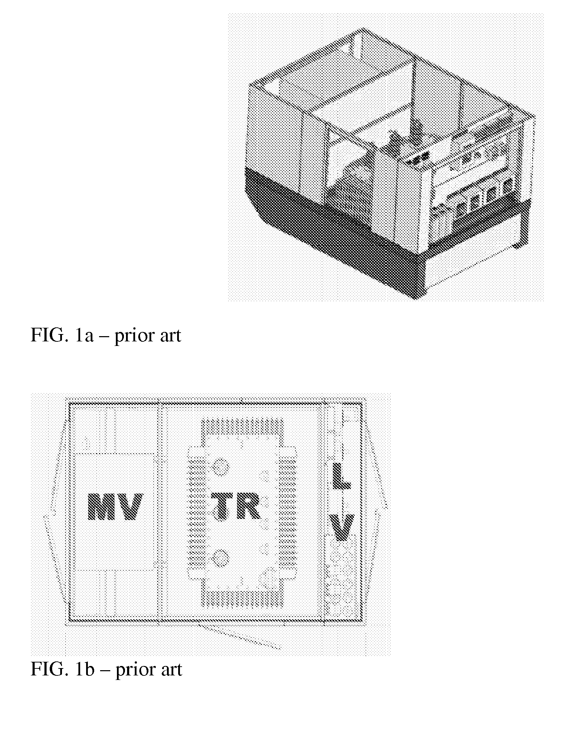

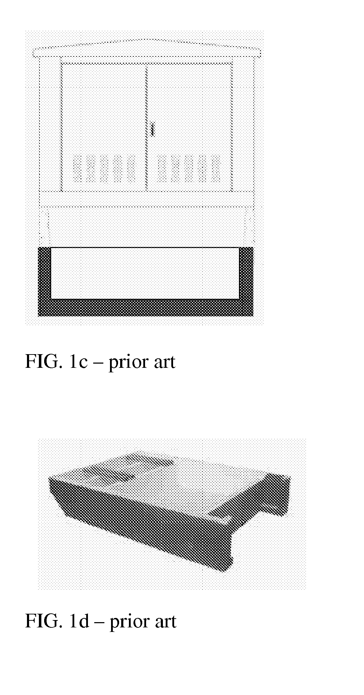

The term Compact Secondary Substation (CSS) is typically used for transformer stations in which the power from the main electricity net is transformed from medium voltage, which is in the range 1-50 kV, to low voltage, which is in the range of <1000 volts. Typical CSS are produced with a concrete foundation and a concrete or metal housing on top of the foundation. Examples of typical prior art CSS are shown in FIG. 1, where FIG. 1a shows a three dimensional sketch illustrating the central transformer and a medium voltage (MV) end on one side of the transformer and a low voltage (LV) end at the other side of the transformer. The low voltage side is shown in the lower right part of the image. FIG. 1b is a sketch in a top view of the CSS, and FIG. 1c is a front view from outside the CSS. The lower part of the image shows the foundation.

A foundation is typically provided as one concrete block, as it is illustrated in FIG. 1d, the foundation having a central trench for accommodation of the transformer base, the trench acting as a closed basin for oil capture in case that the cooling oil from the transformer leaks out of the transformer. The right end of the illustrated concrete foundation has an open volume formed as a trench, into which cables are inserted from the underground. This open volume is finally closed with an end plate.

For CSS of different sizes, different concrete foundations are produced as well as housings of different sizes. Production wise, this is a rather expensive solution, in as much as the different sizes of buildings are not easy to have on stock and, therefore, have to be made on demand. The latter, however, limits the flexibility and requires a rather large time scale; if not a production facility is running with overcapacity. It would, therefore, be desirable to find a solution requiring less storage facilities, implying greater flexibility and reducing the production costs.

### DESCRIPTION / SUMMARY OF THE INVENTION

It is therefore the object of the invention to provide a foundation for an electrical transformer station with high construction flexibility at rather low cost.

This object is achieved with a foundation for an electrical transformer station, wherein the foundation is assembled from a plurality of prefabricated modules connected to each other and forming a solid and static foundation plate.

By building a foundation plate by prefabricated cuboid modules, a great flexibility is achieved concerning the design of foundations with respect to different dimensions. In the case, where one customer desires a relatively small foundation and another customer desires a relatively large foundation, the same kind of cuboid modules may be used to satisfy both customers. In addition, as the cuboid modules give a high degree of flexibility, they can be produced in great number in advance and kept on stock and used along the line of demand without any substantial waiting time for the customer. Thus, the customer experience a prompt delivery, because the only necessary work left for the production plant is an assembly of cuboid modules in accordance with the size requirements of the customer.

A great advantage for the producer is the fact that prefabricated cuboid modules kept on stock do not suffer from the same risk of long term pre-sale storage as entirely pre-fabricated foundations. In order to have a short delivery time, it has hitherto been necessary to produce small foundations as well as large foundations. However, in this case, if the demand of a certain type of CSS drops, the produced foundations of this type may rest on stock for a long time, which is an expensive solution for the producer. However, with the modular foundations according to the invention, cuboid modules on stock do not impose additional costs in a likewise way, because the same cuboid modules may be used for small foundations as well as large foundations.

Though being a simple solution to an existing problem, the impact for the producer as well as for the customer is substantial.

The term cuboid module is used for rectangular parallelepiped blocks having 6 rectangular or square plane faces. The term pre-fabricated means that the cuboid module is fabricated prior to assembly of the foundation. The building with the modular foundation can, in principle, be used for various applications and housing for technical equipment, however, the invention is primarily directed towards transformer stations, especially CSS.

In a further embodiment, the foundation comprises a trench in one end of the foundation, and a central area of the foundation is built up of a first type of cuboid modules. The first type of cuboid modules may then advantageously be elongate and have a length equal to the length of the trench. Often, however, the foundation comprises a trench at each of the two opposite ends. In this case, likewise, the foundation area between the trenches may be built up of a plurality of a first type of cuboid modules, the first type of cuboid modules being elongate and having a length in the order of the length of at least one of the two trenches or equal to the length of at least one of the two trenches.

The foundation plate has a length L and a width W. If the width W of the foundation plate is larger than the length L1 of the first type of elongate cuboid modules, the foundation plate may, additionally, include a second type of cuboid modules, where the second type of cuboid modules are mounted to the ends of the first type of cuboid modules in order to form the desired width W of the foundation plate. Preferably, the second type of cuboid modules has a length L2 substantially shorter than the first type of cuboid modules of the foundation.

As this second type of cuboid modules form the longitudinal sides of the foundation, the longitudinal sides may be extended with further cuboid modules of the second type to form the end walls for the trenches at the ends of the foundation. Alternatively, the longitudinal sides may be extended with further cuboid modules of a third type of cuboid modules to form end walls for the trenches at the ends of the foundation; the third type of cuboid modules is different from the second type of cuboid modules, for example shorter.

In order to mount the cuboid modules together, the cuboid modules may have grooves in their sides, and a corresponding plug may be used for binding two adjacent grooves together. For example, if the grooves are T-formed or substantially T-formed, the plugs are correspondingly H-formed or substantially H-formed. One alternative to the T-formed grooves are trapezoidal, whereas the plugs have a correspondingly double-trapezoidal cross section for fitting into two adjacent trapezoidal grooves. Other types of grooves may be used for assembly. Using a groove and plug assembly eases the production of foundations relative to a mounting, where the cuboid modules are screwed together by suitable bolts, though this is also an option.

In order to get a tight and stable connection between the cuboid modules, the grooves or the plugs, or both may advantageously have a slight wedge-like inclination along the vertical direction in order to reduce the tolerances between the plug end the groove in dependence of the insertion depth of the plug into the groove. A proper and deep insertion of a plug in a groove then provides mutual stress between the groove and the plug.

The modules of the foundation may be made of concrete, preferably with steel reinforcement, but may, as well be made of other materials, for example fibre reinforced polymers.

### SHORT DESCRIPTION OF THE DRAWINGS

The invention will be explained in more detail with reference to the drawing, where
FIG. 1a) illustrates a perspective view of a prior art transformer station; b) illustrates a top view of a prior art transformer station; c) illustrates a side view of a prior art transformer station; d) illustrates a foundation plate of a prior art transformer station;
FIG.2 a) illustrates a perspective of a first foundation according to the invention; b) illustrates a perspective of a first foundation according to the invention with equipments in the trenches; c) illustrates a top view of a first foundation according to the invention with equipments in the trenches;
FIG. 3 a-e show a number of different types of modules;
FIG. 4 illustrates an alternative foundation;
FIG. 5 a) illustrates a cross section of an H-formed plug and b) shows an H-formed plug with inclining sides;
FIG. 6 illustrates a) a groove and b) a plug based on a trapezoidal cross section;
FIG. 7 illustrates an inclining trapezoidal groove and a corresponding plug,

### DETAILED DESCRIPTION / PREFERRED EMBODIMENT

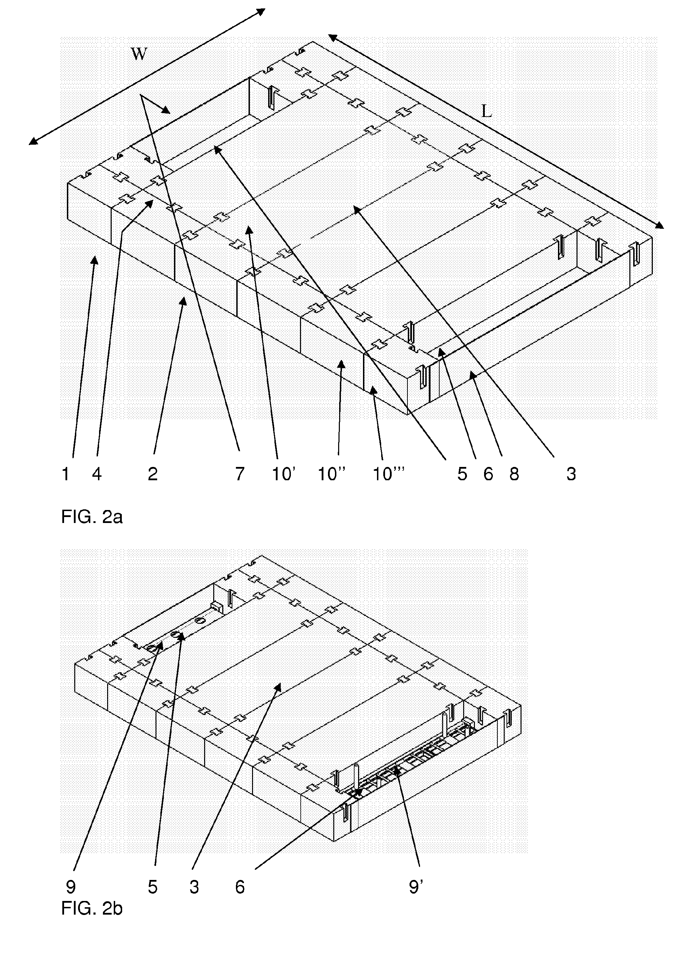

FIG. 2a illustrates a foundation according to the invention, globally indicated by the reference number 1. The foundation is a solid and static plate 2 with a length L and a width W and formed by a number of modules 10, preferably cuboid modules, that are attached to each other.

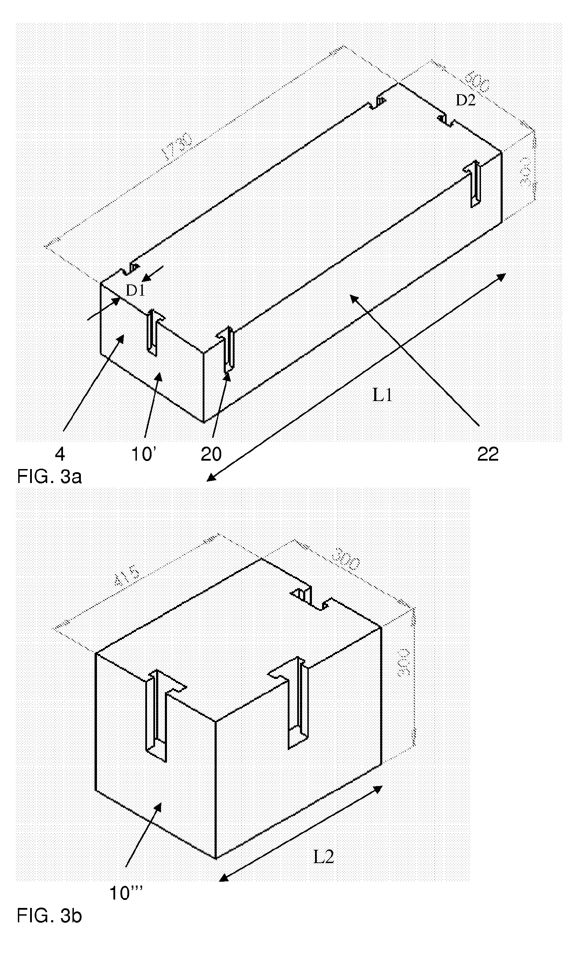

Examples of cuboid modules 10 are shown in FIG. 3a-3e, where as illustrated the different cuboid modules 10 have varying dimensions in order to have degrees of freedom in the design of foundations.

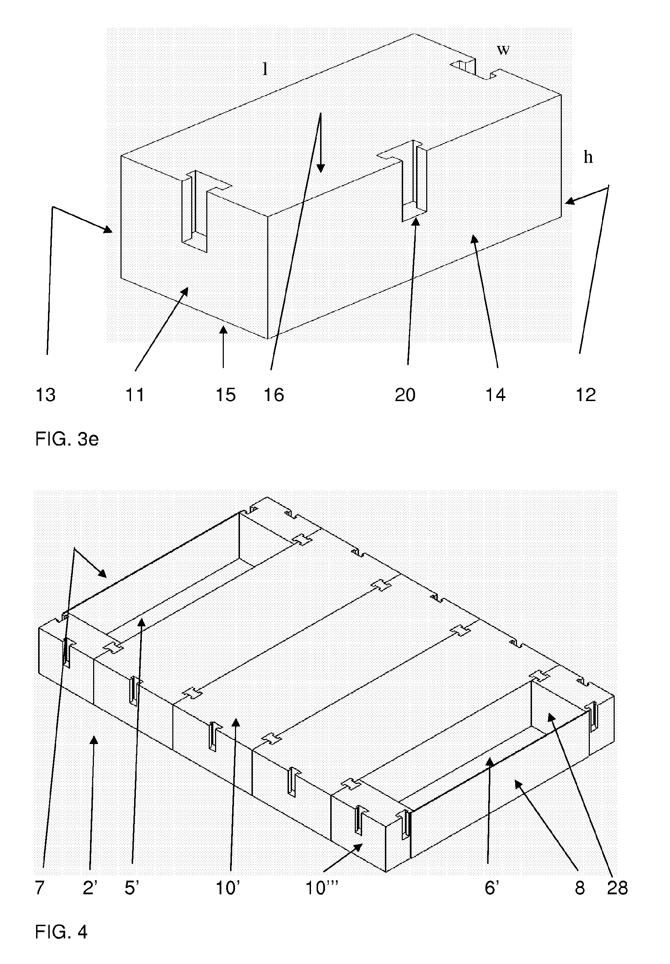

Each module 10 comprises: a first face 11 and a second face 12 which are substantially parallel to each other and are spaced apart by a distance 1 which defines the length of the module 10; a third face 13 and a fourth face 14 which are substantially parallel to each other and are spaced apart by a distance w which defines the width of the module 10; a fifth face 15 and a sixth face 16 which are substantially parallel to each other and are spaced apart by a distance h which defines the height of the module 10. The parameters 1, w, and h are indicated in FIG. 3e for illustration.

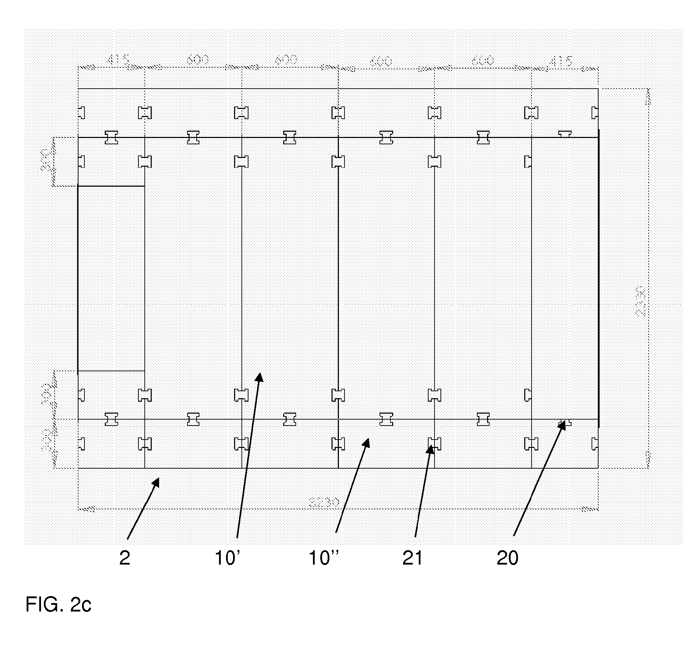

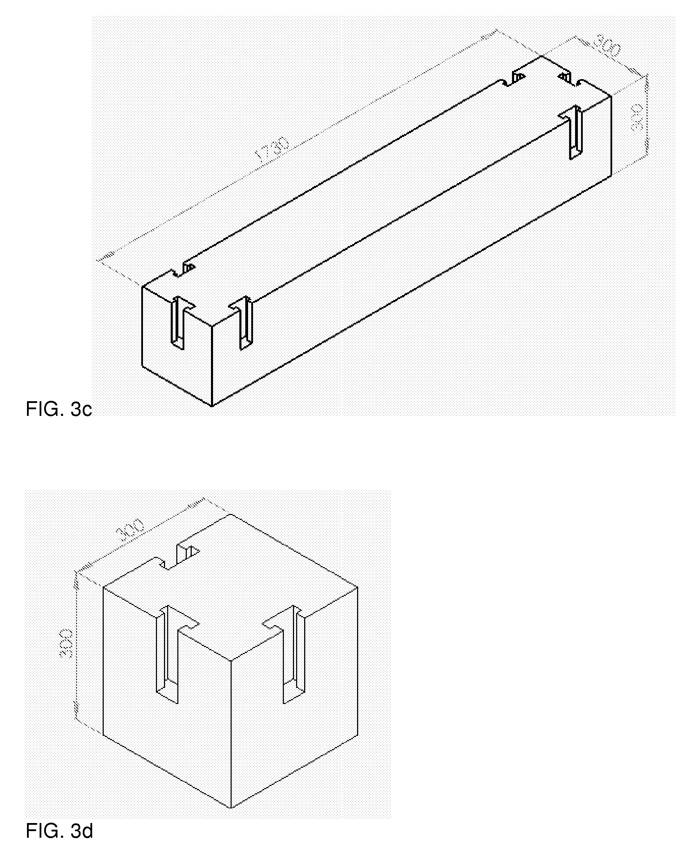

For example, the relatively long cuboid modules 10', shown in FIG. 3a, may primarily be used for the central part 3 of the foundation plate 2 as indicated in FIG. 2a and FIG. 2c. The number of adjacent cuboid modules of the elongate type 10' determines the length of the foundation. At the ends 4 of the long cuboid modules 10', the smaller cuboid modules 10", as shown in FIG. 3b, 3d or 3e, may be used to extend the foundation to the desired width, as indicated in FIG. 2a and FIG. 2c. Also, as shown in FIG. 4 being an alternative and shorter foundation plate 2', the short cuboid modules 10"' may be used to adjust the width of the trenches 5, 6 at the ends 7, 8 of the foundation plate 2'.

FIG. 2b is a foundation similar to FIG. 2a, though certain pre-mountings 9, 9' have been placed in the trenches 5, 6 of the foundation plate 2, one of the trenches 5 being used for the MV equipment and another trench 6 being used for the LV equipment, and, respectively, for entrance of the MV ground cables and LV ground cables into the CCS. A transformer (not shown) would be located approximately on a central part 3 on the foundation plate 2, optionally in a oil capturing jar for prevention of oil flow out of the CSS in case of a leak in the cooling circuit of the oil-cooled transformer. FIG. 2c illustrates a top view of the foundation.

Dimensions shown are only examples and are not limiting the invention. An example of dimensions of the above mentioned elongate modules 10' is a length of 1730 mm and a width of 600 mm,

The foundation is covered by a building, typically a metal shelter with roof and access doors for access to the installation of the transformer station, but other materials could be used, such as reinforced plastics.

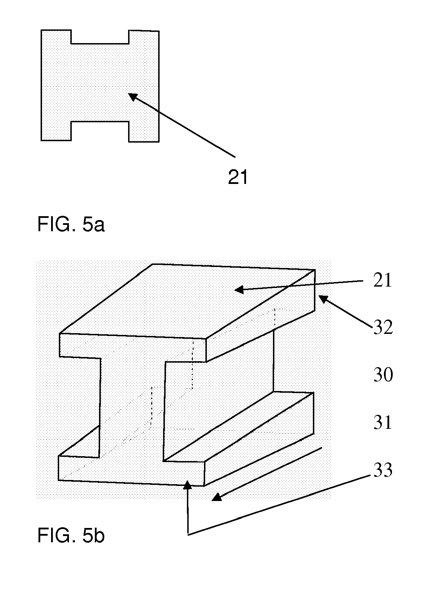

The cuboid modules 10 are assembled by connecting grooves 20 in the side of the cuboid modules 10, 10', 10", 10"'. The grooves 20, as illustrated in FIG.s 3a-3e, are T-formed, and when two cuboid modules 10 are placed adjacent to another, an H-formed plug 21, as illustrated in FIG. 5, is inserted into the adjacent grooves 20 holding the cuboid modules 10 together after insertion. This is seen in FIGs. 2a-2c. and FIG. 4. As it appears from the various cuboid modules illustrated in FIG. 3a through 3e, the smaller cuboid modules 10", 10'" have grooves 20 on three sides, though it is also possible to provide cuboid modules with grooves 20 on all four sides 11, 12, 13, 14. The long cuboid modules 10' may have grooves only near the ends 4, as illustrated in FIG. 3a and FIG. 3c. For example, the grooves 20 on the long sides 22 have a distance D1 from the end 4 of the cuboid module 10', which is less than the width D2 of the cuboid module. Also, the long cuboid modules 10' may be provided with different length-to-widths ratios as can be seen from the comparison of FIG. 3a and 3c. Dimensions shown are only examples and are not limiting the invention. In addition, the drawings are not to scale.

The H-formed plug 21 system, as illustrated in FIG. 5, is only one of possible fastening principles. Alternatives could be found, for example, some cuboid modules having grooves and other cuboid modules having corresponding plugs, just like the principle of a puzzle.

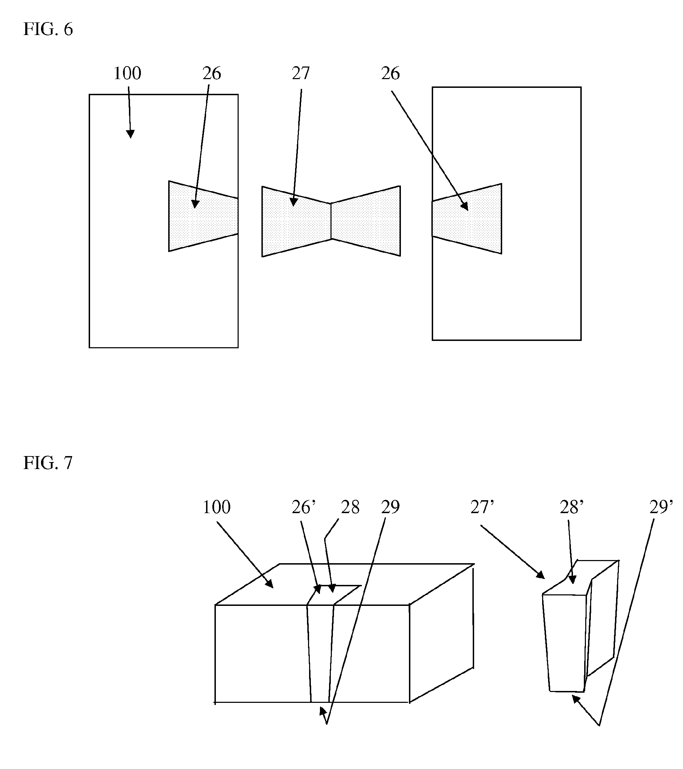

In FIG. 6, an alternative groove and plug combination is shown, where the groove 26 in a module (only illustrated stylistically) has a trapezoidal cross section and the plug 27 is substantially doubled trapezoidal to fit into the groove 26 of the cuboid modules 100.

The plug and grooves according to the invention may be formed with a slight inclination along the vertical direction in order to reduce the tolerances between the plug end the groove in dependence of the insertion depth of the plug into the groove. This is generally applicable for the variety of possible plugs and grooves in a modular foundation according to the invention. This is illustrated for the H-formed plug in FIG. 5b and for a trapezoidal plug in FIG. 7, which, however, is not limiting this principle to these two examples but applies equally well for other varieties. In FIG. 7, the plug 27' is double trapezoidal and the groove 26' is trapezoidal. As can be seen in FIG. 7, the width of the trapezoidal groove 26' and the width of the plug 27' is larger at the upper end 28, 28' than at the lower end 29, 29'. The wedge-like inclination of the plug 27' and the groove 26' provides mutual stress between the groove 26' and the plug 27' when the plug 27' is properly inserted into the groove 26'. Likewise, the H-formed plug in FIG. 5b has an inclination such that the side arms 30 decrease in width with distance (indicated by arrow 31) from the top 32 of the plug to towards the bottom 33 of the plug.

FIG. 4 illustrates a further foundation, where relatively long cuboid modules 10' have been used to form a central part 3' of the foundation plate 2', and where small cuboid modules 10'" have been mounted directly on the long cuboid modules 10' in order to provide walls 28 for the trenches 5', 6' in both ends 7, 8 of the foundation plate 2'. This foundation plate 2' in FIG. 4 may be used for smaller CSS as compared to the foundation in FIG. 2a.

## Claims

1. A foundation for an electrical transformer station, **characterised in that** the foundation is assembled from a plurality of prefabricated modules (10, 10', 10", 10"') connected to each other and forming a solid and static foundation plate (2, 2').

2. A foundation according to claim 1, **characterized in that** the modules (10, 10', 10", 10"') are cuboids or substantially cuboid formed.

3. A foundation according to claim 2, **characterized in that** the transformer station is a CSS.

4. A foundation according to any preceding claim, **characterized in that** the foundation plate (2) comprises a trench (5) in one end (4) of the foundation plate (2) and a central part (3) built up of a first type (10') of modules, the first type of modules being elongate and having a length in the order of or equal to the length of the trench (5).

5. A foundation according to claim 4, **characterized in that** the foundation plate comprises a trench (5, 6) at each of two opposite ends (7, 8), wherein an area (3) of the plate (2) between the trenches (5, 6) is built up of a plurality of a first type (10') of cuboid modules, the first type (10') of cuboid modules being elongate and having a length in the order of or equal to the length of at least one of the two trenches (5, 6).

6. A foundation according to claim 5, **characterized in that** the foundation plate (2) has a width W larger than the length L1 of the first type (10') of elongate cuboid modules and comprises a second type (10") of cuboid modules, the second type of cuboid modules being mounted to the ends (4) of the first type (10') of cuboid modules.

7. A foundation according to claim 6, **characterized in that** the second type (10") of cuboid modules form the longitudinal sides of the foundation plate (2), the longitudinal sides being extended with further cuboid modules of the second type (10") of cuboid modules or of a third type (10"') of cuboid modules to form end walls (28) for the trenches (5, 6) at the ends (7, 8) of the plate (2), the third type (10"') of modules being different from the second type (10") of modules.

8. A foundation according to any preceding claim, **characterized in that** the cuboid modules (10, 10', 10", 10"') have grooves (20, 26) in their sides (11, 12,13, 14, 15, 16) for mutual assembly with a corresponding plug (21, 27) binding two adjacent grooves together.

9. A foundation according to claim 8, **characterized in that** the grooves (20) are T-formed or substantially T-formed and the plugs (21) are correspondingly H-formed or substantially H-formed.

10. A foundation according to claim 8, **characterized in that** the grooves (26') are substantially trapezoidal, and wherein the plugs (27') have a correspondingly double-trapezoidal cross section for fitting into two adjacent trapezoidal grooves.

11. A foundation according to claim 10, **characterized in that** the grooves (26') or the plugs (21, 27'), or both have a slight wedge-like inclination in order to reduce the tolerances between the plug end the groove in dependence of the insertion depth of the plug into the groove for providing mutual stress between the groove and the plug when the plug is properly inserted into the groove.

12. A compact secondary substation, comprising a foundation (2) according to any preceding claim, a transformer on the foundation and a building covering the transformer.
